# EUROPÄISCHE PATENTANMELDUNG

(11) **EP 1 249 330 A1**
(43) Veröffentlichungstag der Anmeldung: **16.10.2002**
(21) Anmeldenummer: 02007108.0
(22) Anmeldetag: 28.03.2002
(51) Int. Cl.: B29C 45/56

(54) **Verfahren zur Herstellung eines Kunststoff-Bauteils und Bauteil**

(30) Priorität: 12.04.2001 DE 10118357; 23.01.2002 DE 10202369
(71) Anmelder: Dynamit Nobel Kunststoff GmbH, 91781 Weissenburg (DE)
(72) Erfinder: Krämer, Hermann, 91465 Ergerheim (DE)
(74) Vertreter: Scherzberg, Andreas, Dr.

(57) **Zusammenfassung**

Die Erfindung betrifft ein Verfahren zur Herstellung eines Kunststoff-Bauteils, insbesondere für Kraftfahrzeuge, mit einer Aussparung (6), wie einer Bohrung, einem Durchbruch, einer Einprägung oder einer Ausklinkung, durch ein Spritzgießverfahren, wobei plastischer Kunststoff (1) in eine Form gegeben wird und anschließend das Bauteil in seine gewünschte Gestalt gebracht wird.

Zur Schaffung eines Kunststoff-Bauteils mit einer Aussparung für einen zu befestigenden Gegenstand wird vorgeschlagen, dass nach dem Einbringen des Kunststoffs (1) in die Form zumindest ein Formkörper (3) mit den Außenabmessungen der Aussparung (6) in den zumindest noch teilweise plastischen Kunststoff (1) eingetaucht wird und so die Aussparung (6) erzeugt, und gleichzeitig zumindest ein zum Kunststoff (1) Kontakt haltender Stempel (4) angehoben wird und so ein Ausgleichsvolumen für den durch das Einfahren des Formkörpers (3) verdrängten Kunststoff geschaffen wird.

## Beschreibung

Die Erfindung betrifft ein Verfahren zur Herstellung eines Kunststoff-Bauteils nach dem Oberbegriff des Anspruchs 1 und ein Bauteil hergestellt nach diesem Verfahren.

Die wirtschaftliche Herstellung von Kunststoff-Bauteilen in großen Stückzahlen erfolgt im Spritzgießverfahren oder Varianten hiervon (z. B. Spritzprägen). Beim Spritzgießverfahren wird plastischer Kunststoff in eine Form gegeben und anschließend das Bauteil in seine gewünschte Gestalt gebracht.

Um an das Bauteil Anbauteile zu befestigen, muss dieses zumindest eine Aussparung wie eine Bohrung, einen Durchbruch, eine Einprägung oder eine Ausklinkung aufweisen.

Derartige Aussparungen können dabei während der Formgebung durch Umfließen von Werkzeugbereichen, die die Aussparung abbilden, erzeugt werden. Als Lösung der Fehlstellenproblematik hat sich die Herstellung des Bauteils ohne Aussparung und eine anschließende Nachbearbeitung außerhalb des Spritzgießwerkzeuges als wirtschaftliche Lösung bewährt (gute Bauteilqualität bei akzeptablem Nachbearbeitungsaufwand). Die Nachbearbeitung erfolgt durch Trennen des Materials innerhalb der Aussparung vom Bauteil. Trennverfahren wie Bohren, Stanzen, Fräsen, Strahlschneiden (Wasser, Laser) seien hierbei als Auswahl genannt. Eine Herstellung der Aussparung während des Spritzgießens erscheint prinzipiell möglich. Füllt man ein geöffnetes Werkzeug mit Schmelze und presst diese durch Schließen des Werkzeuges, so kann mit einem geeignetem Werkzeug hierbei ein Aussparung erzeugt werden.

Das Spritzgießen von Bauteilen mit Aussparungen bedingt jedoch das Umfließen von Werkzeugteilen und das Aufeinandertreffen von Schmelzefronten, die sich als linienförmige Fehlstelle am Bauteil abzeichnen.

Ein Verdrängen des Werkstoffes durch das Spritzgießen hat Veränderungen der optischen Eigenschaften im Bereich um die Aussparung zur Folge und dürfte vom Kunden vermutlich nicht akzeptiert werden.

Die alternative Nacharbeit mittels Trennverfahren hat eine Spanbildung zur Folge, die Oberflächenschäden mit sich bringen kann. Die Verschmutzung mit Medien beim Strahlschneiden (Wasser, Abrieb, Schmauch) zwingt zur Reinigung, die hohe Kosten mit sich bringt (Qualität, Personal, Prozesssicherheit). Die Handhabung der Bauteile bei der Nacharbeit hat negative Folgen für die Qualität der Oberfläche und ermöglicht keine wirtschaftliche Fertigung.

Der Erfindung liegt die Aufgabe zu Grunde, ein Verfahren zur Herstellung eines Kunststoff-Bauteils nach dem Oberbegriff des Anspruchs 1 so zu verbessern, dass beim Spritzgießen zugleich eine Aussparung für einen zu befestigenden Gegenstand geschaffen wird, ohne die optischen Eigenschaften des Bauteils zu beeinträchtigen.

Erfindungsgemäß wird diese Aufgabe durch die kennzeichnenden Merkmale des Anspruchs 1 gelöst.

Beim erfindungsgemäßen Verfahren taucht zumindest ein Formkörper mit den Außenabmessungen der zu erzeugenden Aussparung (die Schwindung ist hier nicht berücksichtigt!) in den zumindest noch teilweise plastischen Kunststoff ein und verformt und verdrängt das Volumen des Formkörpers an Kunststoff.

Um ein definiertes Fließen des zumindest teilweise noch plastischen Kunststoffs und eine zu optischen Beeinträchtigungen führende Verdichtung des Werkstoffs zu vermeiden ist es nötig, das Werkzeugvolumen zu erhöhen und zumindest einen Stempel zurückzunehmen.

In bevorzugter Ausführungsform bildet der Stempel eine Begrenzungswand der Form. Der Stempel kann jedoch auch im Angussbereich angeordnet werden.

Vorteilhafterweise werden für jede Aussparung zwei Formkörper verwendet, die auf einer gemeinsamen Längsachse gegenüberliegend angeordnet sind. Hierdurch wird eine saubere Kantenausbildung der Aussparung erreicht.

Bevorzugt ist die Aussparung eine Bohrung.

Zur Herstellung von transparenten Bauteilen wird ein transparenter Kunststoff wie z. B. Polycarbonat verwendet.

Bevorzugt werden in der Aussparung Anbauteile wie Scheibenwischer oder Sonnendächer für Kraftfahrzeuge montiert.

Die Erfindung betrifft auch die nach diesem Verfahren hergestellten Bauteile, wie z. B. Fensterscheiben, bevorzugt Heckscheiben für Kraftfahrzeuge.

Vorteile des erfindungsgemäßen Verfahrens sind:
- Geringere Ausschusszahlen durch weniger Handhabung und Bearbeitungsstationen.
- Verbesserte Positionstoleranz hinsichtlich Lage der Aussparung, da keine erneute Positionierung erfolgt.
- Höhere Produktivität durch geringerem Nacharbeitsaufwand
- Geringere Investitionen in Vorrichtungen (Aufnahme, Maschine) für Nacharbeit
- Geringerer Raumbedarf in der Fertigung

Vorteilhaft lässt sich diese Erfindung bei einer Heckscheibe für einen PKW verwenden und dort z. B. zur Anbringung der Bohrung für die Achse des Scheibenwischers, Befestigung von Sonnendächern etc.

Weitere Merkmale der Erfindung ergeben sich aus den Figuren, die nachfolgend beschrieben sind. Es zeigt:
- Fig. 1a, b: das erfindungsgemäße Verfahren beispielhaft mit einem Stempel und
- Fig. 2a, b: das erfindungsgemäße Verfahren beispielhaft mit zwei gegenüberliegenden Stempeln.

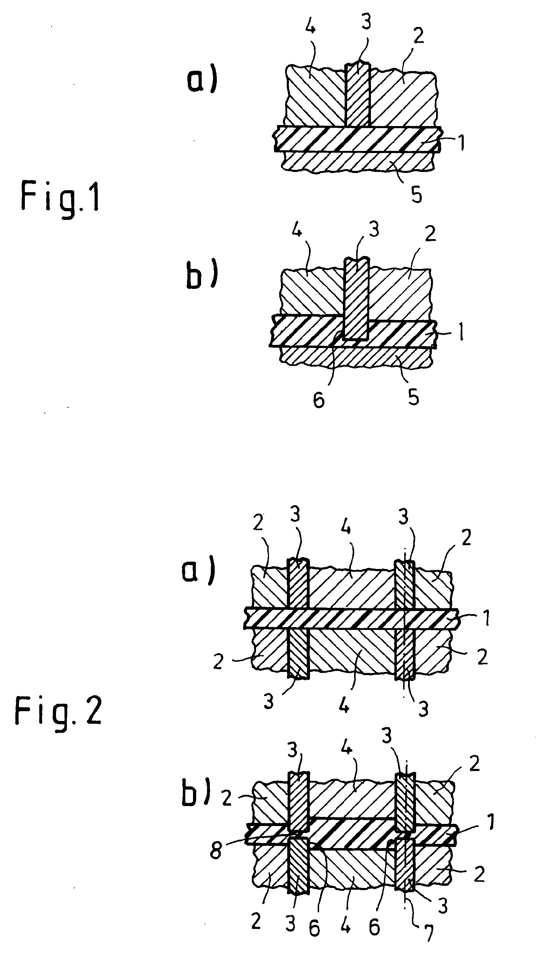

Fig. 1a zeigt schematisch im Ausschnitt eine Gießform mit einer unteren Werkzeugwand 5 und einer oberen Werkzeugwand 2. In die Form ist ein plastischer Kunststoff 1 eingebracht worden. In der Werkzeugwand ist erfindungsgemäß ein verschiebbarer Formkörper 3 und ein verschiebbarer Stempel 4 eingelassen. Fig. 1a zeigt den Zustand nach dem Einfüllen des Kunststoffs 1 in die Form.

Fig. 1b zeigt den darauffolgenden Arbeitsschritt, nämlich das erfindungsgemäße Eintauchen des Formkörpers 3, der bis auf eine Schwindung den Außenabmessungen einer zu schaffenden Aussparung entspricht, in den zumindest noch teilweise plastischen Kunststoff 1. Gleichzeitig mit dem Eintauchen des Formkörpers 3 wird der Stempel 4 angehoben und so ein Ausgleichsvolumen für den durch das Einfahren bzw. Eintauchen des Formkörpers verdrängten Kunststoff geschaffen. In dieses Ausgleichsvolumen fließt der verdrängte Kunststoff. Vorteilhafterweise ist der Stempel 4 in unmittelbarer Nachbarschaft zum Formkörper 3 angeordnet.

Nach Aushärten des Kunststoffs 1 wird dieser aus der Form entfernt. Die geschaffene Aussparung ist mit dem Bezugszeichen 6 angedeutet.

Die Figuren 2a, b zeigen das erfindungsgemäße Verfahren zur Herstellung von zwei Aussparungen, wobei für jede Aussparung 6 zwei Formkörper 3 verwendet werden, die auf einer gemeinsamen Längsachse 7 gegenüberliegend angeordnet sind.

Fig. 2a zeigt, wie schon Fig. 1a, den Zustand nach dem Einfüllen des Kunststoffes 1 in die Form.

Der Kunststoff ist begrenzt von der Werkzeugwand 2, den Formkörpern 3 und den Stempeln 4.

Fig. 2b zeigt wieder das erfindungsgemäße Eintauchen der hier vier Formkörper 3 in den Kunststoff 1 und das gleichzeitige Anheben der beiden Stempel 4. Hierdurch werden zwei Aussparungen 6 geschaffen.

Ein eventuell verbleibender Mittelsteg 8 könnte durch eine weitere Hubbewegung eines der zugehörigen Formkörper 3 entfernt werden.

## Patentansprüche

1. Verfahren zur Herstellung eines Kunststoff-Bauteils, insbesondere für Kraftfahrzeuge, mit einer Aussparung (6) wie einer Bohrung, einem Durchbruch, einer Einprägung oder einer Ausklinkung, durch ein Spritzgießverfahren, wobei plastischer Kunststoff (1) in eine Form gegeben wird und anschließend das Bauteil in seine gewünschte Gestalt gebracht wird, **dadurch gekennzeichnet, dass** nach dem Einbringen des Kunststoffs (1) in die Form zumindest ein Formkörper (3) mit den Außenabmessungen der Aussparung (6) in den zumindest noch teilweise plastischen Kunststoff (1) eingetaucht wird und so die Aussparung (6) erzeugt, und gleichzeitig zumindest ein zum Kunststoff (1) Kontakt haltender Stempel (4) angehoben wird und so ein Ausgleichsvolumen für den durch das Einfahren des Formkörpers (3) verdrängten Kunststoff geschaffen wird.

2. Verfahren nach Anspruch 1, **dadurch gekennzeichnet, dass** der Stempel (4) eine Begrenzungswand der Form bildet.

3. Verfahren nach Anspruch 1 oder 2, **dadurch gekennzeichnet, dass** der Kunststoff (1) transparent ist, wie z.B. Polycarbonat.

4. Verfahren nach einem der Ansprüche 1 bis 3, **dadurch gekennzeichnet, dass** für jede Aussparung (6) zwei Formkörper (3) verwendet werden, die auf einer gemeinsamen Längsachse (7) gegenüberliegend angeordnet sind.

5. Verfahren nach einem der Ansprüche 1 bis 4, **dadurch gekennzeichnet, dass** in der Aussparung (6) Anbauteile, wie Scheibenwischer oder Sonnendächer für das Kraftfahrzeug montiert werden.

6. Bauteil hergestellt nach dem Verfahren eines der vorhergehenden Ansprüche.

7. Bauteil nach Anspruch 6, **dadurch gekennzeichnet, dass** das Bauteil eine Fensterscheibe ist.

8. Bauteil nach Anspruch 7, **dadurch gekennzeichnet, dass** die Fensterscheibe eine Heckscheibe eines Kraftfahrzeugs ist.
